Europäisches Patentamt

European Patent Office

Office européen des brevets

(19)

(11) Veröffentlichungsnummer: **0 095 644**
**B1**

(12) **EUROPÄISCHE PATENTSCHRIFT**

(45) Veröffentlichungstag der Patentschrift: **23.03.88**

(51) Int. Cl.⁴: **B 65 B 13/32, B 65 B 13/22**

(21) Anmeldenummer: **83104802.0**

(22) Anmeldetag: **16.05.83**

(54) **Vorrichtung zum Verbinden der sich überlappenden Enden eines um ein Packstück gespannten Umreifungsbandes.**

(30) Priorität: **29.05.82 DE 3220445**

(43) Veröffentlichungstag der Anmeldung:
**07.12.83 Patentblatt 83/49**

(45) Bekanntmachung des Hinweises auf die
Patenterteilung:
**23.03.88 Patentblatt 88/12**

(84) Benannte Vertragsstaaten:
**AT BE CH DE FR GB IT LI LU NL SE**

(56) Entgegenhaltungen:
**DE-A-2 363 275**
**DE-A-2 616 033**
**DE-B-1 290 868**
**US-A-4 155 799**

(73) Patentinhaber: **Hoesch Aktiengesellschaft**
**Eberhardstrasse 12**
**D-4600 Dortmund 1 (DE)**

(72) Erfinder: **Bartzick, Günter**
**Kölner Strasse 262**
**D-5828 Ennepetal (DE)**
Erfinder: **Bühne, Gerd**
**Ehrenberg 83**
**D-5830 Schwelm (DE)**
Erfinder: **Naydowski, Reinhard, Ing. (grad.)**
**Oswald-Greb-Strasse 6**
**D-5630 Remscheid (DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2 (DE)**

Courier Press, Leamington Spa, England.

EP 0 095 644 B1

**Beschreibung**

Die Erfindung betrifft eine Vorrichtung zum Spannen eines von einer Vorratsrolle abziehbaren und um ein Packstück gelegten Umreifungsbandes aus Kunststoff und zum Verbinden der sich überlappenden Enden des Umreifungsbandes durch Schweißen und zum Abtrennen des für die gespannte Umreifung überschüssigen Teils des zur Vorratsrolle führenden Umreifungsbandes, bestehend aus einer Vorschub- und Spannvorrichtung für das Umreifungsband, das zunächst mit einer das zu umreifende Packstück mit Abstand umschließenden Bandführung vorschiebbar und anschließend bei festgehaltenem vorderen Bandende durch Zurückziehen in Anlage gegen das Packstück bringbar und dann spannbar ist und einer Verschlußeinrichtung zum Verschweißen der sich überlappenden Bandenden, mit einer zwischen Umreifungsband und Packstück angeordneten Gegenplatte, gegen die drei in bandlängsrichtung hintereinander wirkende Druckteile kurvenscheibengesteuert mit quer zur Bandlängsrichtung verlaufender Drehachse gegen Federwirkung zur Anlage bringbar sind, wobei der erste Druckteil zum Einklemmen des vorderen, freien Bandendes, der zweite Druckteil zum Einklemmen des zweiten Bandendes und der dazwischen angeordnete dritte Druckteil zum Andrücken der sich überlappenden Bandenden gegen die als heißes Messer ausgebildete Schweißvorrichtung und zum Zusammenpressen der angeschmolzenen Bandenden und zum Abtrennen des zur Vorratsrolle führenden Umreifungsbandes dient.

Bei dieser aus der DE—AS 12 90 868 bekannten Vorrichtung sind die Druckteile von Schwenkhebeln gebildet, die jeweils als Gelenkvierecke ausgebildet sind. Das am starren Hebelarm befestigte Hebelpaar verläuft dabei waagerecht oberhalb der Kurvenscheibe und muß eine verhältnismäßig große Länge aufweisen, damit das gegen das Band zur Anlage kommende Hebelende eine möglichst geradlinige Bewegung ausführt. Die die Druckteile aufweisende Verschlußeinrichtung erfordert somit in Bandlängsrichtung verhältnismäßig viel Platz. Weiterhin sind für die Betätigung der drei Druckteile zwei Kurvenscheibe erforderlich. Die eine Kurvenscheibe betätigt dabei die beiden Druckteile zum Einklemmen der beiden sich überlappenden Bandenden, während die zweite Kurvenscheibe eine eigenständige Kurvenbahn aufweist und erst dann den zwischen den beiden Einklemm-Druckteilen angeordneten dritten Druckteil betätigt, wenn die beiden äußeren Druckteile bereits die sich überlappenden Bandenden festgeklemmt haben.

Der Erfindung liegt die Aufgabe zugrunde, eine Vorrichtung der eingangs erläuterten Art zu schaffen, bei der der Antrieb der drei Druckteile mit einem geringen Platzbedarf erfolgt, wobei die Wirkung der Druckteile nicht beeinträchtigt wird.

Diese Aufgabe wird erfindungsgemäß dadurch gelöst, daß die drei in Bandlängsrichtung hintereinander angeordneten Druckteile von geradlinig verschiebbaren Stempeln gebildet sind und die zur Betätigung der drei in Bandlängsrichtung hintereinander angeordneten Stempel vorgesehene Kurvenscheibe eine einzige Kurvenbahn aufweist und der mittlere Stempel unmittelbar mit einer Anlagerolle mit der Kurvenbahn der Kurvenscheibe zusammenwirkt, während die beiden anderen Stempel jeweils mit einer Anlagerolle gegen die Kurvenflächen von schwenkbaren Steuerhebeln anliegen, die ihrerseits über Anlagerollen mit der Kurvenbahn der Kurvenscheibe jeweils in Umfangsrichtung zur Anlagerolle des mittleren Stempels versetzt in Wirkverbindung stehen. Durch den Antrieb der drei Druckteile mit einer Kurvenscheibe mit einer einzigen Kurvenbahn und der Ausbildung der Druckteile als geradlinig verschiebbare Stempel und dem Verlauf der Drehachse der Kurvenscheibe quer zur Bandlängsrichtung wird nur wenig Platz unterhalb der Verschlußeinrichtung benötigt, so daß die Vorschub- und Spanneinrichtung sehr nahe an der Verschlußeinrichtung angeordnet werden kann. Durch den unmittelbaren Angriff des mittleren Stempels an die Kurvenscheibe und die Zwischenschaltung von schwenkbaren Steuerhebeln zwischen der Kurvenscheibe und den beiden äußeren Stempeln kann in einfacher Weise die Kurvenscheibe mit der einzigen Kurvenbahn alle drei Stempel betätigen.

Der mit seiner Anlagerolle unmittelbar an die Kurvenbahn der Kurvenscheibe angreifende mittlere Stempel kann derart zur Kurvenscheibe angeordnet sein, daß die Längsmittellinie des Stempels die Drehachse der Kurvenscheibe schneidet. Dadurch wirkt der Kurvenverlauf der Kurvenscheibe unmittelbar als Schiebebewegung auf den mittleren Stempel.

Die beiden schwenkbaren Steuerhebel können jeweils für die Anlage der Anlagerolle des zugehörigen Stempels eine die Verschiebung des zugehörigen Stempels bewirkende Kurvenfläche aufweisen, an die sich eine konzentrisch zum Lagerzapfen verlaufende Kurvenfläche anschließt. Dadurch wird in einfacher Weise erreicht, daß beim bestimmungsgemäßen Verschwenken der Steuerhebel durch die Kurvenscheibe aus der Grundstellung, in der die Anlagerollen der Steuerhebel gegen den niedrigsten Bereich der Kurvenscheibe anliegt, lediglich auf dem ersten Teil der Schwenkbewegung der Steuerhebel mit der ansteigenden Kurvenfläche die Verschiebung des zugehörigen Stempels bewirkt, während bei dem weiteren Verschwenken der Steuerhebel die Anlagerollen der zugehörigen Stempel mit der konzentrisch zum Lagerzapfen des Steuerhebels verlaufenden Kurvenfläche in Wirkverbindung treten und mit diesem Bereich der Kurvenfläche, die konzentrisch zum Lagerzapfen des Steuerhebels verläuft, eine Verschiebung des zugehörigen Stempels nicht mehr erfolgt. Die Kurvenbahn der Kurvenscheibe kann somit Erhebungen aufweisen, die nicht mehr eine weitere Verschiebung der Stempel bewirken, die über die Zwischenschaltung der Steuerhebel betätigt werden. Mit diesen Erhebungen der Kurvenbahn der Kurvenscheibe, die nicht mehr auf die steuerhebelbetätigten Stempel einwirken, ist eine separate Betätigung des mittleren Stempels möglich. Die Kurvenscheibe weiste somit Erhebungen auf, die zwar ein Verschwenken der Steuerhebel bewirken, jedoch nicht mehr auf die steuerhebelbetätigten Stempel einwirken und nur noch den mittleren Stempel für sich betätigen. Dabei kann der mittlere Stempel derart zur Kurvenscheibe angeordnet werden, daß seine Verschiebung nur mit den Teilen der Erhebungen der Kurvenbahn der Kurvenscheibe betätigt werden, die über die Erhebungen der Kurvenbahn der Kurvenscheibe hinausgehen, mit denen die steuerhebelbetätigten Stempel betätigt werden.

Die drei Stempel können jeweils zweiteilig ausgebildet und in an sich bekannter Weise der die Anlagerolle aufweisende Teil und der gegen das Umreifungsband zur Anlage kommende Teil entgegen der Wirkung eines vorgespannten Kraftspeichers begrenzt gegeneinander verschiebbar sein. Der jeweils gegen das Umreifungsband zur Anlage kommende Teil der Stempel kommt somit kraftschlüssig gegen das Umreifungsband zur Anlage, so daß beim Andrücken dieser Teile gegen das Umreifungsband Fertigungstoleranzen und die Toleranzen des Bandes ausgeglichen werden.

Bei den beiden zum Einklemmen der Bandenden dienenden Stempel kann jeweils das den Kraftspeicher bildende Paket Tellerfedern von einer Schraube durchgriffen sein, die den die Anlagerolle aufweisenden Teil und den gegen das Umreifungsband zur Anlage kommenden Teil in einem vorbestimmten Abstand hält und die Vorspannung bestimmt. Zum Vorspannen der Tellerfedern kann somit in einfacher Weise eine Schraube benutzt werden, mit der zugleich in einfacher Weise jeweils die beiden Teile des Stempels zusammengehalten werden.

Bei den beiden, zum Einklemmen der Bandenden dienenden Stempeln kann jeweils der die Anlagerolle aufweisende Teil in seiner der Anlagerolle abgekehrten Stirnfläche eine Aussparung aufweisen, in der das Peket Tellerfedern angeordnet ist und in der der gegen das Umreifungsband zur Anlage kommende Teil, wie an sich bekannt, mit einem abgesetzten Ansatz teleskopartig verschiebbar eingreift. Dadurch ist in einfacher Weise das Paket Tellerfedern jeweils im Inneren des Stempels angeordnet, wobei die Aussparung zur Aufnahme des Paketes Tellerfedern zugleich zur verschiebbaren Führung eines abgesetzten Ansatzes des anderen Teiles des Stempels ausgebildet ist.

Der zum Einklemmen des vorderen freien Bandendes dienende Stempel kann in bekannter Weise einen Schlitz zum Durchführen des Umreifungsbandes aufweisen, wobei der Schlitz von einer einen U-förmigen Querschnitt aufweisenden, aufgesetzten Kappe gebildet ist, die mit einem die Schenkel durchquerenden Spannstift an dem Teil des Stempels gehaltert ist, der dem Umreifungsband zugekehrt ist und mit seiner freien Stirnfläche die Anlage- und Haltefläche für das vordere Ende des Umreifungsbandes bildet. Dieser Schlitz in dem zum Einklemmen des vorderen, freien Bandendes dienenden Stempel ist erforderlich, damit das Umreifungsband vorgeschoben und nach dem Einklemmen des vorderen, freien Bandendes durch Zurückziehen an das Packstück zur Anlage gebracht und gespannt werden kann. Um eine einfache Fertigung und Montage zu erzielen, wird dabei der Schlitz von einer einen U-förmigen Querschnitt aufweisenden, aufgesetzten Kappe gebildet. Diese Teile lassen sich in besonders einfacher Weise herstellen und mit einem Spannstift miteinander verbinden.

Beim mittleren Stempel, der in bekannter Weise zum Andrücken der sich überlappenden Bandenden gegen das die Heizvorrichtung bildende heiße Messer und zum Zusammenpressen der angeschmolzenen Bandenden dient, kann der dem Umreifungsband zugekehrte Teil einen Ansatz mit T-förmigem Querschnitt aufweisen, der in eine T-förmige Nut des die Anlagerolle aufweisenden Teiles eingreift und dabei entgegen der Wirkung des Kraftspeichers ein begrenztes Zusammendrücken der beiden Teile in Längsrichtung des Stempels zuläßt. Die beiden Teile des mittleren Stempels sind somit einfach montierbar formschlüssig durch einen T-förmigen Ansatz und eine T-förmige Nut miteinander verbunden, wobei jedoch ein begrenztes Zusammendrücken der beiden Teile entgegen der Wirkung des Kraftspeichers möglich ist.

Beim mittleren Stempel kann das den Kraftspeicher bildende Paket Tellerfedern von einem an einem Kolben angeformten Zapfen durchgriffen sein, wobei der Kolben mit dem Paket Tellerfedern in einer in dem die Anlagerolle aufweisenden Teil vorgesehenen Aussparung angeordnet und der unter der Wirkung der Tellerfedern stehende Kolben gegen die freie Stirnfläche des T-förmigen Ansatzes des dem Umreifungsband zugekehrten Teiles des Stempels anliegt. Die beiden, mit einem T-förmigem Ansatz und einer T-förmigen Nut miteinander verbundenen Teile des mittleren Stempels werden somit von dem unter der Wirkung des Kraftspeichers stehenden Kolben auseinandergedrückt. Die den Kraftspeicher bildenden Tellerfedern sind dabei auf dem Kolben angeformten Zapfen aufgesteckte.

Der an dem Kolben angeformte Zapfen, der das Paket Tellerfedern durchgreift, kann mit seinem freien Ende in einen Durchbruch verschiebbar eingreifen, der im Boden der das Paket Tellerfedern aufnehmenden Aussparung vorgesehen ist. Dadurch wird in einfacher Weise der Zapfen und damit der Kolben gegen durch Kippen hervorgerufenes Klemmen gesichert.

Beim mittleren Stempel kann der dem Umreifungsband zugekehrte Teil in seiner dem Umreifungsband zugekehrte Stirnfläche eine T-förmige Nut aufweisen, in der ein Anlageteil mit etwa T-förmigen Querschnitt eingreift und entgegen der Wirkung einer Feder begrenzt eindrückbar ist. Der mittlere Stempel weist somit noch ein besonderes Anlageteil auf, welches begrenzt eindrückbar ist und sich beim bestimmungsgemäßen Gebrauch flächig gegen das anzudrückende Umreifungsband anlegt.

Der Anlageteil des mittleren Stempels kann in der Unterseite eine kalottenförmige Aufnahme für den kalottenförmigen Kopf eines federbelasteten Stößels aufweisen. Mit dieser Abstützung des Anlageteils des mittleren Stempels ist auch ein Kippen des Anlageteils möglich, so daß sich der Anlageteil allen Unebenheiten des Umreifungsbandes anpassen kann. Der Anlageteil des mittleren Stempels liegt beim bestimmungsgemäßen Gebrauch immer flächig gegen das Umreifungsband an.

Der federbelastete Stößel kann an der Rückseite des kalottenförmigen Kopfes einen Zapfen aufweisen, auf dem eine Schraubendruckfeder aufgesteckt ist, die sich einerends gegen die Rückseite des kalottenförmigen Kopfes und anderends gegen den Boden einer zur Führung des Kopfes dienenden Ausnehmung abstützt. Die Schraubendruckfeder ist somit in einfacher Weise auf den an der Rückseite des kalottenförmigen Kopfes vorgesehenen Zapfen aufgesteckt und hält den kalottenförmigen Kopf zuverlässig in Anlage gegen den Anlageteil des mittleren Stempels.

Der an der Rückseite des kalottenförmigen Kopfes vorgesehene Zapfen kann mit seinem freien Ende in einen Durchbruch verschiebbar eingreifen, der im Boden der die Schraubendruckfeder aufnehmenden Ausnehmung vorgesehen ist, wobei der Zapfen in der eingedrückten Stellung gegen den federbelasteten Kolben der beiden Teile des Stempels zur Anlage kommt. Dadurch ist in einfacher Weise der Zapfen und damit auch der kalottenförmige Kopf zuverlässig gegen Kippen gesichert und das Eindrücken des Anlageteiles begrenzt.

Auf der quer zur Bandlängsrichtung verlaufenden Drehachse der Kurvenscheibe für die Betätigung der drei Stempel kann eine weitere Kurvenscheibe für das Einschieben und Herausziehen eines die sich überlappenden Bandenden in einem Abstand zueinander haltenden Schiebers vorgesehen sein. Mit der Drehachse der Kurvenscheibe für die Betätigung der drei Stempel wird somit in einfacher Weise zugleich ein Schieber über eine weitere Kurvenscheibe betätigt, mit dem die beiden Bandenden beim Vorschieben des Umreifungsbandes und beim Zurückziehen und beim Spannen im Abstand zueinander gehalten werden.

Auf der Zeichnung ist der Gegenstand der Erfindung in einem Ausführungsbeispiel dargestellt, und zwar zeigen:

Fig. 1 die Vorrichtung in schematischer Darstellung, in der Stellung, in der das Umreifungsband vorgeschoben werden kann,

Fig. 2 die Vorrichtung in schematischer Darstellung, in der Stellung, in der das vordere freie Bandende festgeklemmt ist,

Fig. 3 die Vorrichtung in schematischer Darstellung, in der Stellung, in der beide Bandenden eingeklemmt sind,

Fig. 4 die Vorrichtung in schematischer Darstellung, in der Stellung, in der die beiden Bandenden gegen das eingeschobene heiße Messer angedrückt werden,

Fig. 5 die Vorrichtung in schematischer Darstellung, in der Stellung, in der die beiden Bandenden von dem heißen Messer entfernt sind,

Fig. 6 die Vorrichtung in schematischer Darstellung, in der Stellung, in der die beiden angeschmolzenen Bandenden gegeneinander gepreßt werden,

Fig. 7 der zum Einklemmen des vorderen, freien Bandendes dienende Stempel in Seitenansicht, teilweise im Schnitt,

Fig. 8 einen Schnitt nach der Linie VIII—VIII der Fig. 7,

Fig. 9 der zum Einklemmen des zweiten Bandendes dienende Stempel in Seitenansicht, teilweise im Schnitt,

Fig. 10 einen Schnitt nach der Linie X—X der Fig. 9,

Fig. 11 den mittleren Stempel in Seitenansicht, teilweise im Schnitt,

Fig. 12 einen Schnitt nach der Linie XII—XII der Fig. 11,

Fig. 13 die von einem heißen Messer gebildete Schweißvorrichtung, mit deren Antrieb in einem Schnitt nach der Linie XIII—XIII der Fig. 14,

Fig. 14 einen Schnitt nach der Linie XIV—XIV der Fig. 13 und

Fig. 15 die Vorschub- und Spannvorrichtung und die Verschlußvorrichtung in Rückansicht.

Die auf der Zeichnung dargestellte Vorrichtung dient zum Spannen eines von einer nicht näher dargestellten Vorratsrolle abziehbaren und um ein nicht näher dargestelltes Packstück gelegten Umreifungsbandes 20 aus Kunststoff und zum Verbinden der sich überlappenden Enden 21, 22 des Umreifungbandes 20 durch Schweißen und zum Abtrennen des für die gespannte Umreifung überschüssigen Teiles 23 des zur Vorratsrolle führenden Umreifungsbandes.

Die Vorrichtung besteht aus einer an sich bekannten und nicht in ihren Einzelheiten dargestellten Vorschub- und Spannvorrichtung 24 für das Umreifungsband 20, das zunächst in einer das zu umreifende Packstück mit Abstand umschliessenden, nicht näher dargestellten Bandführung vorschiebbar und anschließend bei festgehaltenen vorderen Bandende durch Zurückziehen in Anlage gegen das Packstück bringbar und dann spannbar ist. Die Vorrichtung weist weiterhin eine Verschlußeinrichtung 25 auf zum Verschweißen der sich überlappenden Bandenden 21, 22. Die Verschlußeinrichtung 25 ist mit einer zwischen Umreifungsband 20 und Packstück angeordneten Gegenplatte 26 versehen, gegen die drei, in Bandlängsrichtung hintereinander angeordnete, geradlinig verschiebbare Stempel 27, 28, 29 zur Anlage bringbar sind.

Der erste Stempel 27 dient zum Einklemmen des vorderen, freien Bandendes 21, der zweite Stempel 28 zum Einklemmen des zweiten Bandendes 22 und der dazwischen angeordnete dritte Stempel 29 zum Andrücken der sich überlappenden Bandenden 21, 22 gegen die als heißes Messer 30 ausgebildete Schweißvorrichtung und zum Zusammenpressen der angeschmolzenen Bandenden 21, 22 und zum Abtrennen des zur Vorratsrolle führenden Teiles 23 des Umreifungsbandes. Die Betätigung der drei Stempel 27, 28, 29 erfolgt in noch zu beschreibender Weise mit einer Kurvenscheibe 31 mit einer einzigen Kurvenbahn.

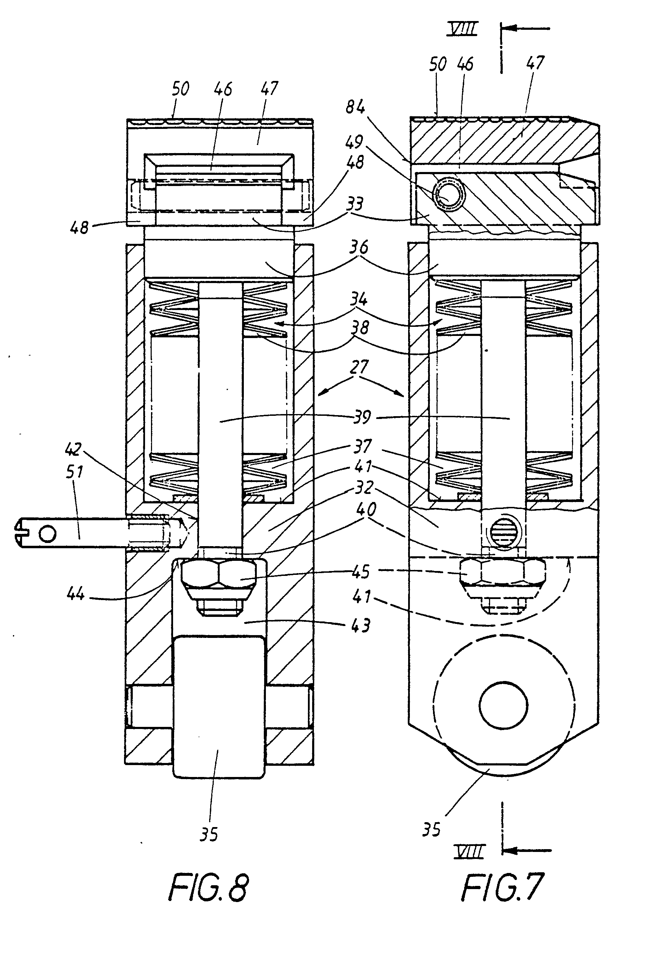

Der zum Einklemmen des vorderen freien Bandendes 21, dienende erste Stempel 27 ist in den Fig. 7 und 8 dargestellt. Der Stempel 27 besteht aus dabei aus zwei Teilen 32 und 33, wobei die beiden Teile 32, 33 entgegen der Wirkung eines vorgespannten Kraftspeichers 34 begrenzt zusammendrückbar sind. Der Teil 32 des Stempels 27 weist an seinem freien Ende eine Anlagerolle 35 auf und ist mit diesem Ende der Kurvenscheibe 31 zugekehrt. Der Teil 33 des Stempels 27 ist dem einzuklemmenden Bandende 21 zugekehrt und weist einen angesetzten Ansatz 36 auf, mit der Teil 33 des Stempels 27 in einer entsprechenden Aussparung 37 des die Anlagerolle 35 aufweisenden Teiles 32 des Stempels 27 teleskopartig verschiebbar eingreift. Die Aussparung 37 des die Anlagerolle 35 aufweisenden Teiles 32 des Stempels 27 dient zugleich zur Aufnahme des Kraftspeichers 34, der von einem Paket Tellerfedern 38 gebildet ist.

An der freien Stirnfläche des abgesetzten Ansatzes 36 des gegen das Umreifungsband 10 zur Anlage kommenden Teiles 33 des Stempels 27 ist ein Zapfen 30 angesetzt, der an seinem freien Ende mit Gewinde 40 versehen ist. Der Zapfen 39 durchgreift mit seinem freien Ende einen im Boden 41 der das Paket Tellerfedern 38 aufnehmenden Aussparung 37 vorgesehenen Durchbruch 42 und ragt bis in eine schlitzförmige Aufnahme 43, die für die Anlagerolle 35 vorgesehen ist. Auf dem Gewinde 40 des Zapfens 39 ist eine gegen den Boden 44 der schlitzförmigen Aufnahme 43 für die Anlagerolle 35 zur Anlage kommende Mutter 45 aufgezogen, die als Sicherungsmutter ausgebildet ist. Durch Drehen der Mutter 45 kann die Vorspannung des aus einem Paket Tellerfedern 38 gebildeten Kraftspeichers 34 und dabei auch die Länge des Stempels 37 eingestellt werden.

Der zum Einklemmen des vorderen, freien Bandendes 21 dienende Stempel 27 weist einen Schlitz 46 zum Durchführen des Umreifungsbandes 20 auf. Dieser Schlitz 46 wird von dem zur Vorratsrolle führenden Teil 23 des Umreifungsbandes 20 durchgriffen und erlaubt ein Zurückziehen und Spannen des Umreifungsbandes nach dem Einklemmen des vorderen Bandendes 21 mit dem Stempel 27. Der Schlitz 46 wird dabei von dem Abstand zwischen dem Teil 33 des Stempels 27 und einer einen U-förmigen Querschnitt aufweisenden, auf gesetzten Kappe 47 gebildet. Die den U-förmigen Querschnitt aufweisende Kappe 47 ist mit einem die Schenkel 48 durchquerenden Spannstift 49 an dem Teil 33 des Stempels 27 gehaltert, der dem Umreifungsband zugekehrt ist und bildet mit seiner freien Stirnfläche die Anlage- und Haltefläche 50 für das freie, vordere Ende des Umreifungsbandes 20.

Wie insbesondere aus der Fig. 8 ersichtlich, ist an dem Stempel 27 seitlich ein Zapfen 51 vorgesehen. Dieser Zapfen 51 dient zum Anhängen einer nicht näher dargestellten Feder, mit der der Stempel 27 für die Rückführung in die Grundstellung belastet ist.

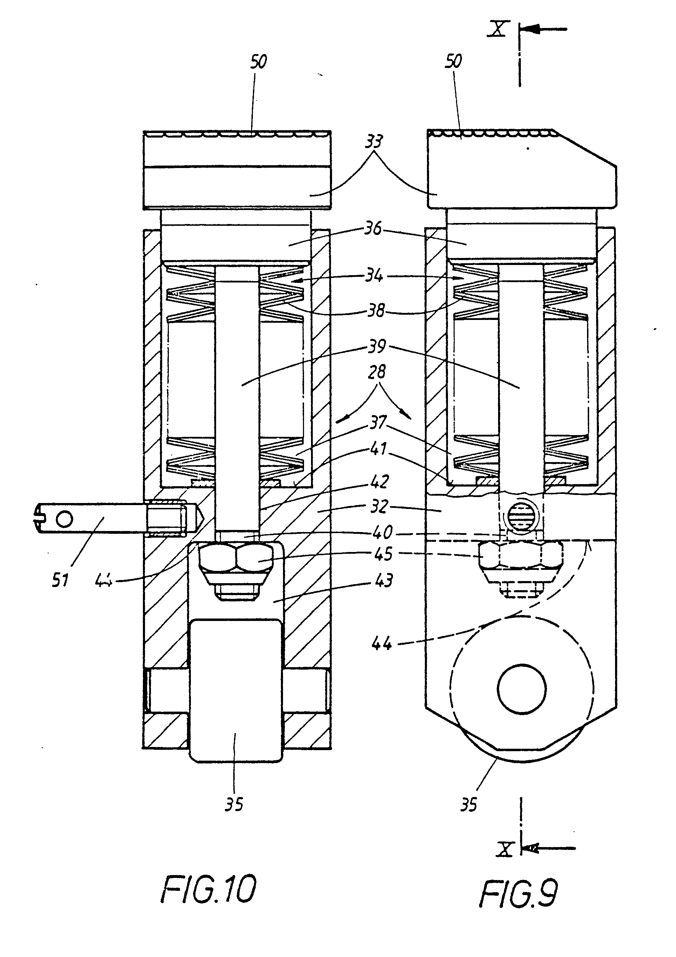

Der zum Einklemmen des zweiten Bandendes 22 dienende zweite Stempel 28 ist in den Fig. 9 und 10 näher dargestellt. Der Aufbau des zweiten Stempels 28 entspricht im wesentlichen dem Aufbau des in den Fig. 7 und 8 dargestellten ersten Stempels 27, so daß auf die entsprechenden Erläuterungen verwiesen werden kann. Der zweite Stempel 28 weist jedoch keinen Schlitz 48 auf, so daß der dme Unreifungsband 20 zugekehrte Teil 33 des Stempels 28 unmittelbar die Anlage- und Haltefläche 50 aufweist. Die Einzelteile des Stempels 28 weisen dabei die gleichen Bezugszeichen auf, wie die Einzelteile des Stempels 27.

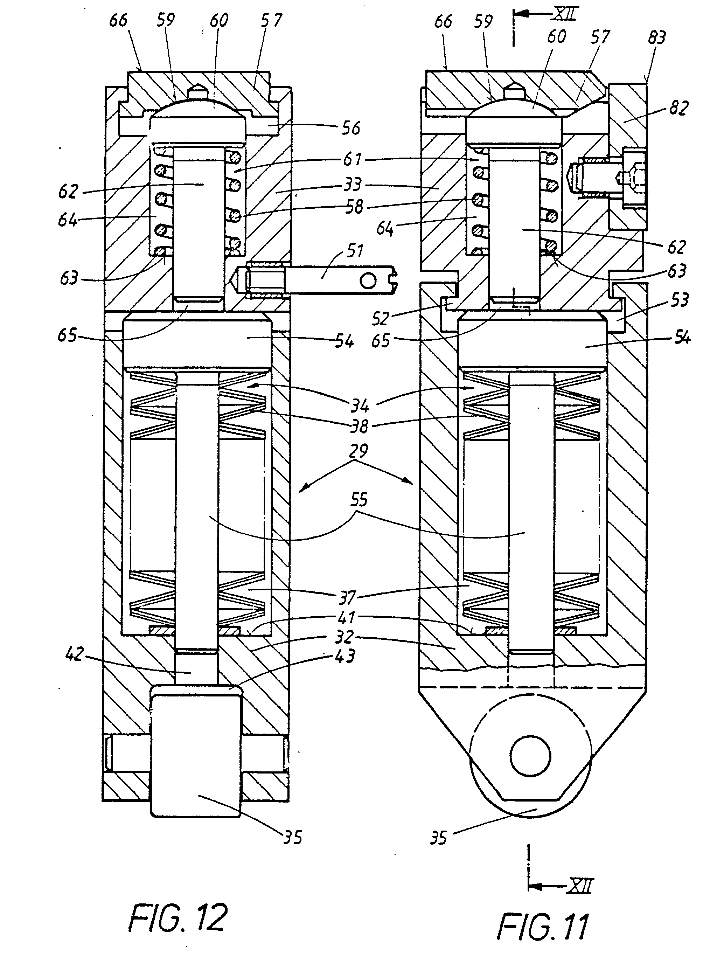

Der zwischen den beiden Stempeln 27, 28 angeordnete dritte Stempel 29, der zum Andrükken der sich überlappenden Bandenden 21, 22 gegen die als heißes Messer 30 ausgebildete Schweißvorrichtung und zum Zusammenpressen der angeschmolzenen Bandenden 21, 22 und zum Abtrennen des zur Vorratsrolle führenden Teiles 23 des Umreifungsbandes dient, ist in den Fig. 11 und 12 näher dargestellt. Der Stempel 29 besteht ebenfalls aus zwei Teilen 32, 33 wobei der die Anlagerolle 35 aufweisende Teil 32 und der gegen das Umreifungsband 20 zur Anlage kommende Teil 33 entgegen der Wirkung eines vorgespannten Kraftspeichers 34 begrenzt gegeneinander verschiebbar sind. Auch dabei ist der Kraftspeicher 34 wiederum von einem Paket Tellerfedern 38 gebildet.

Der dem Umreifungsband 20 zugekehrte Teil 33 des Stempels 29 weist einen Ansatz 22 mit einem T-förmigem Querschnitt auf, der in eine T-förmige Nut 53 des die Anlagerolle 35 aufweisenden Teiles 32 eingreift. Dadurch ist eine besonders einfache Montage möglich. Der T-förmige Ansatz 52 und die T-förmige Nut 53 sind dabei derart ausgebildet, daß entgegen der Wirkung des Kraftspeichers 34 ein begrenztes Zusammendrücken der beiden Teile 32, 33 in Längsrichtung des Stempels 29 möglich ist.

Das den Kraftspeicher 34 bildende Paket Tellerfedern 38 ist von einem an einem Kolben 54 angeformten Zapfen 55 durchgriffen, wobei der Kolben 54 mit dem Paket Tellerfedern 38 in einer in dem die Anlagerolle 35 aufweisenden Teil 32 vorgesehenen Aussparung 37 angeordnet ist. Der unter der Wirkung der Tellerfedern 38 stehende Kolben 54 liegt gegen die freie Stirnfläche des T-förmigen Ansatzes 52 des dem Umreifungsband 20 zugekehrten Teiles 33 des Stempels 29 an. Der an dem Kolben 54 angeformte Zapfen 55, der das Paket Tellerfedern 38 durchgreift, greift mit seinem freien Ende verschiebbar in einen Durchbruch 42 ein, der im Boden 41 der das Paket Tellerfedern 38 aufnehmenden Aussparung 37 vorgesehen ist. Dadurch ist der unter der Wirkung der Tellerfedern 38 stehende Kolben 54 mit dem Zapfen 55 in der Aussparung 37 und in dem Durchbruch 42 verschiebbar.

Gegenüber den Stempeln 27 und 28 weist der mittlere Stempel 29 an seiner dem Umreifungsband 20 zugekehrten Stirnfläche des Teiles 33 eine T-förmige Nut 56 auf, in der ein Anlageteil 57 mit etwa T-förmigem Querschnitt eingreift und entgegen der Wirkung einer Feder 58 begrenzt eindrückbar ist. Der Anlageteil 57 des mittleren Stempels 29 weist in der Unterseite eine kalottenförmige Aufnahme 59 für den kalottenförmigen Kopf 60 eines federbelasteten Stößels 61 auf. Der federbelastete Stößel 61 weist an der Rückseite des kalottenförmigen Kopfes 60 einen Zapfen 62 auf, auf dem die Feder 58 in Form einer Schraubendruckfeder aufgesteckt ist, die sich einerends gegen die Rückseite des kalottenförmigen Kopfes 60 und anderends gegen den Boden 63 einer zur Führung des Kopfes 60 dienenden Ausnehmung 64 abstützt. Der an der Rückseite des kalottenförmigen Kopfes 60 vorgesehene Zapfen 62 greift mit seinem freien Ende in einen Durchbruch 65 verschiebbar ein, der im Boden 63 der die Schraubendruckfeder 58 aufnehmenden Ausnehmung 64 vorgesehen ist.

Hiermit wird erreicht, daß beim Andrücken des mittleren Stempels 29 gegen das Umreifungsband 20 der Anlageteil 57 mit seiner Anlage- und Haltefläche 60 immer flächig gegen das Umreifungsband 20 anliegt, da er sich der Fläche des Umreifungsbandes 20 anpaßt. Die Federkraft der Schraubendruckfeder 58 ist dabei jedoch kleiner als die Federkraft des Paketes Tellerfedern 38, so daß beim Andrücken des Stempels 29 gegen das Umreifungsband zunächst die Schraubendruckfeder 58 zusammengedrückt wird, bis der am kalottenförmigen Kopf 60 vorgesehene Zapfen 62 mit seinem freien Ende durch den Durchbruch 65 gegen den Kolben 54 zur Anlage kommt. Erst dann wird beim weiteren Andrücken des Paket Tellerfedern 38 zusammengedrückt.

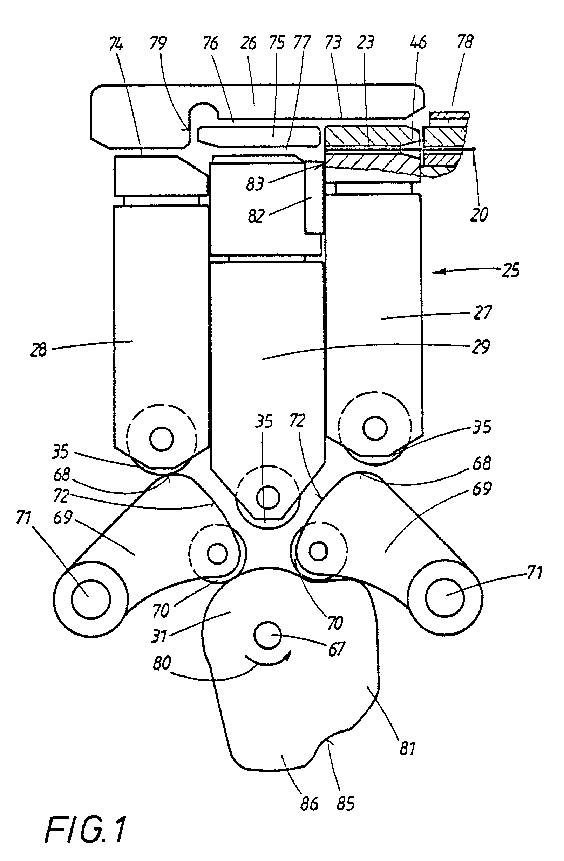

Wie bereits erläutert, erfolgt die Betätigung der drei in Bandlängsrichtung hintereinander angeordneten Stempel 27, 28, 29 mit einer Kurvenscheibe 31 mit einer einzigen Kurvenbahn, deren Drehachse 67 quer zur Bandlängsrichtung verläuft. Die Betätigung der drei Stempel 27, 28, 29 ist dabei in den Fig. 1 bis 6 näher dargestellt. Aus den Zeichnungen ist dabei ersichtlich, daß der mittlere Stempel 29 mit seiner Anlagerolle 35 unmittelbar mit der Kurvenbahn der Kurvenscheibe 31 zusammenwirkt, während die beiden anderen Stempel 27, 28 jeweils mit der Anlagerolle 35 gegen die Kurvenflächen 68 von schwenkbaren Steuerhebeln 69 anliegen. Die Steuerhebel 69 stehen über Anlagerollen 70 mit der Kurvenbahn der Kurvenscheibe 31 jeweils in Umfangsrichtung zur Anlagerolle 35 des mittleren Stempels 29 versetzt in Wirkverbindung.

Der mit seiner Anlagerolle 35 unmittelbar mit der Kurvenbahn der Kurvenscheibe 31 in Wirkverbindung tretende mittlere Stempel 29 ist dabei derart zur Kurvenscheibe 31 angeordnet, daß die Längsmittellinie des geradlinig verschiebbaren Stempels 29 die Drehachse 67 der Kurvenscheibe 31 schneidet. Die Erhebungen der Kurvenbahn der Kurvenscheibe 31 wirken somit unmittelbar als Verschiebung auf den mittleren Stempel 29.

Der eine der beiden Steuerhebel 69 ist mit seinem Schwenkzapfen 71 und mit seiner mit der Kurvenbahn der Kurvenscheibe 31 zusammenwirkenden Anlagerolle 70 derart angeordnet, daß die bogenförmige Andrücklinie der Andrückrolle 70 gegen die Kurvenbahn der Kurvenscheibe 31 mit einem Winkel von etwa 28° in Umfangsrichtung der Kurvenscheibe 31 den Angriffspunkt des mittleren Stempels 29 voreilt, während der zweite Steuerhebel 69 mit dem gleichen Winkel dem Angriffspunkt des mittleren Stempels 20 nacheilt. Die Anlagerollen 35 und 70 des mittleren Stempels 29 und der beiden Steuerhebel 69 können somit ohne Beeinträchtigung an die Kurvenbahn der Kurvenscheibe 31 angreifen.

Die beiden schwenkbaren Steuerhebel 69 weisen jeweils für die Anlage des Anlagerolle 35 des zugehörigen Stempels 27 bzw. 28 eine die geradlinige Verschiebung des zugehörigen Stempels 27 bzw. 28 bewirkende Kurvenfläche 68 auf, an die sich eine konzentrich zum Lagerzapfen 71 verlaufende Kurvenfläche 72 anschließt. Bei einem Verschwenken des Steuerhebels 69 durch die Kurvenbahn der Kurvenscheibe 31 erfolgt somit nur so lange eine Verschiebung des zugehörigen Stempels 27 bzw. 28, wie die Anlagerolle 35 des Stempels 27 bzw. 28 mit der Kurvenfläche 68 des Steuerhebels 69 in Wirkverbindung ist. Sobald die Anlagerolle 35 des Stempels 27 bzw. 28 mit der Kurvenfläche 72 des Steuerhebels 69 in Wirkverbindung tritt, erfolgt keine weitere geradlinige Verschiebung des Stempels 27 bzw. 28 mehr. Dadurch ist es möglich, daß die Kurvenbahn der Kurvenscheibe 31 Erhebungen aufweisen kann, die nur noch für die Betätigung des mittleren Stempels 29 vorgesehen sind und beim Passieren der Anlagerolle 70 der Steuerhebel 69 lediglich eine Leerlaufbewegung der Steuerhebel 69 bewirken.

In der Fig. 1 ist die Verschlußeinrichtung 25 in der Grundstellung dargestellt. Zwischen der Gegenplatte 26 und der Anlage- und Haltefläche 50 des Stempels 27 ist dabei ein Spalt 73 vorgesehen. Ebenso ist auch zwischen der Gegenplatte 26 und der Anlage- und Haltefläche 50 des Stempels 28 ein Spalt 74 vorgesehen. Zwischen der Gegenplatte 26 und der Anlage- und Haltefläche 66 des mittleren Stempels 29 ist ein Schieber 75 vorgesehen, der die sich überlappenden Banden 21, 22 in einem Abstand zueinander hält. Zwischen der Gegenplatte 26 und dem Schieber 75 ist dabei jedoch ein Spalt 76 und zwischen dem Schieber 75 und der Anlage- und Haltefläche 66 des Stempels 29 ein Spalt 77 vorgesehen. In dieser Stellung der Verschlußeinrichtung 25 kann das Umreifungsband 20 mit der Vorschub- und Spannvorrichtung 24 zunächst in der das zu umreifende Packstück mit Abstand umschließenden Bandführung vorgeschoben werden. Von dem vorherigen Umreifungsvorgang ist dabei der zur Vorratsrolle führende Teil 23 des Umreifungsbandes 20 in dem Schlitz 46 des Stempels 27 verblieben. Dieser Teil 23 des Umreifungsbandes 22 wird nun für die nächste Umreifung das vordere, freie Ende 21 des Umreifungsbandes und kann zunächst durch den Spalt 77 und den Spalt 74 vorgeschoben und dann die das Packstück mit Abstand umschließende Bandführung durchlaufen, bis es durch den Führungsschlitz 78 wieder zur Verschlußeinrichtung 25 gelangt und dabei auch noch den Spalt 73 und 76 durchgreift und mit seiner freien Stirnfläche gegen eine abgesetzte Schulter 79 der Gegenplatte 26 anstößt. Hierdurch wird der Vorschub des Umreifungsbandes 20 ausgeschaltet.

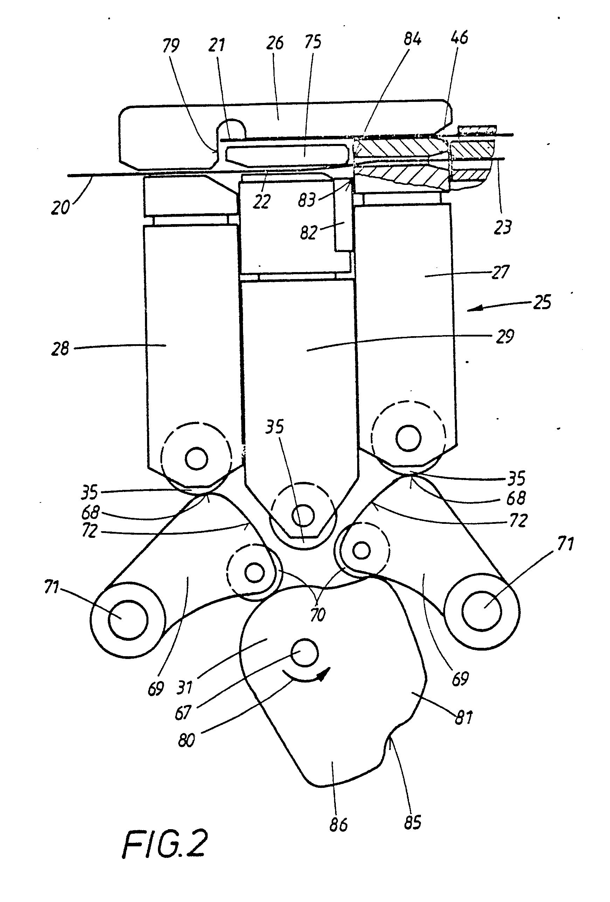

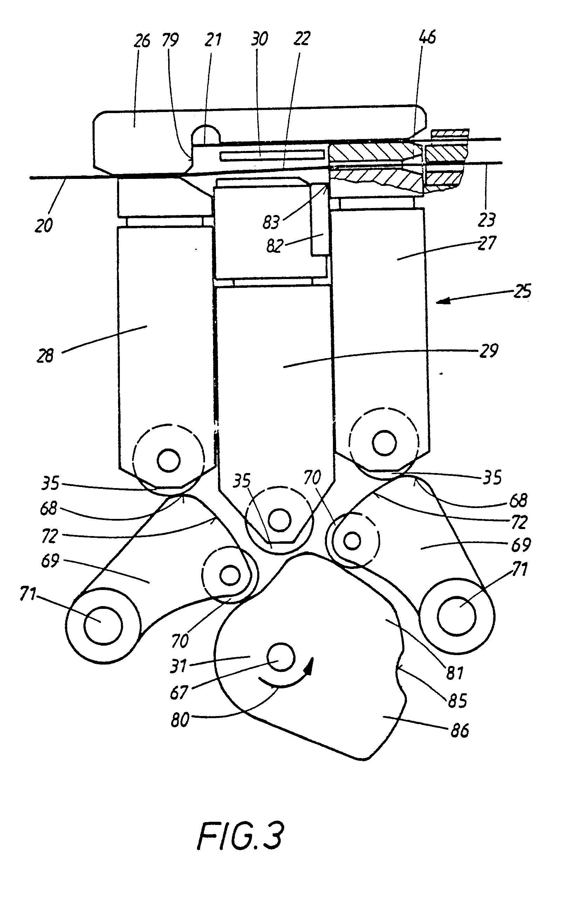

Durch Drehen der Kurvenscheibe 31 mit der Drehachse 67 in Richtung des Pfeiles 80 erfolgt das Einklemmen des vorderen Bandendes 21 des Umreifungsbandes 20 mit dem Stempel 27. Diese Stellung der Verschlußeinrichtung 25 ist in der Fig. 2 dargestellt. Nunmehr kann das Zurückziehen des Umreifungsbandes 20 mit der Vorschub- und Spannvorrichtung 24 erfolgen, bis das Umreifungsband 20 gegen das Packstück zur Anlage kommt. Anschliessend erfolgt dann das Spannen des Umreifungsbandes, ebenfalls mit der Vorschub- und Spannvorrichtung. Nach dem Spannen des Umreifungsbandes 20 erfolgt das Einklemmen des hinteren Endes 22 des Umreifungsbandes 20 mit dem Stempel 28. Dies erfolgt durch weiteres Drehen der Kurvenscheibe 31 in Richtung des Pfeiles 80. Diese Stellung der Verschlußeinrichtung 25 ist in der Fig. 3 näher dargestellt. Nach dem Einklemmen des hinteren Bandendes 22 des Umreifungsbandes 20 wird der Schieber 75 seitlich zwischen den sich überlappenden Bandenden 21, 22 herausgezogen und hierfür das heiße Messer 30 eingeführt. In der Fig. 3 ist das heiße Messer 30 schon zwischen den beiden sich überlappenden Bandenden 21, 22 angeordnet.

Durch weiteres Drehen der Kurvenscheibe 31 mit der Drehachse 67 kommt die Erhebung 81 der Kurvenbahn der Kurvenscheibe 31 mit der Anlagerolle 35 des mittleren Stempels 29 in Wirkverbindung, so daß der mittlere Stempel 29 in Richtung auf die Gegenplatte 26 verschoben wird. Dabei erfolgt zunächst ein Abtrennen des für die gespannte Umreifung überschüssigen Teiles 23 des zur Vorratsrolle führenden Umreifungsbandes. Hierzu ist an dem Teil 33 des mittleren Stempels 29 ein Schneideinsatz 82 vorgesehen, dessen Schneidkante 83 mit der Schneidkante 84 zusammenwirkt, die an der Kappe 47 des Stempels 27 vorgesehen ist. Je nach der Dicke und Festigkeit des durchzuschneidenden Umreifungsbandes kann es dabei vorkommen, daß zunächst der Anlageteil 57 entgegen der Wirkung der Feder 58 so weit in den Teil 33 des Stempels 29 eingedrückt wird, bis der Zapfen 62 des kalottenförmigen Kopfes 60 gegen den Kolben 54 zur Anlage kommt und dann auch noch die beiden Teile 32 und 33 des Stempels 29 vollständig entgegen der Wirkung des Kraftspeichers 34 zusammengedrückt werden, so daß der Teil 33 des Stempels 29 gegen den Teil 32 zur Anlage kommt. Nach dem Durchschneiden des Umreifungsbandes 20 werden mit den Federn 34 und 58 die Teile 32, 33 und 57 wieder in die in den Fig. 11 und Fig. 12 dargestellte Grundstellung zurückgeführt.

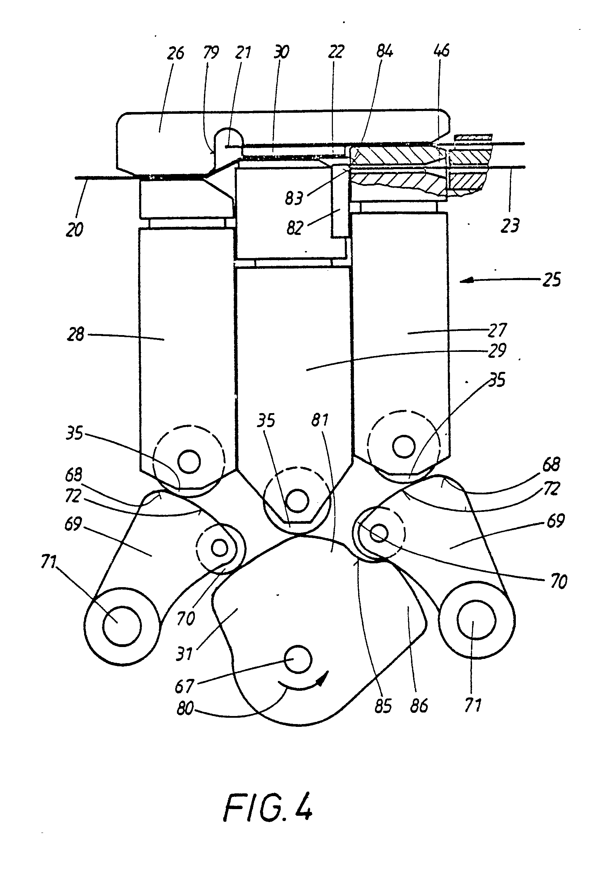

Durch das weitere Verschieben des mittleren Stempels 29 werden die sich überlappenden Bandenden 21, 22 gegen das heiße Messer 30 in Anlage gebracht, so daß die dem heißen Messer 30 zugekehrten Seitenflächen der sich überlappenden Bandenden angeschmolzen werden. Diese Stellung der Verschlußeinrichtung 25 ist in der Fig. 4 näher dargestellt. Bei diesem Andrücken der sich überlappenden Bandenden 21, 22 gegen das heiße Messer 30 wird lediglich die dem Anlageteil 57 zugeordnete Schraubendruckfeder 58 etwas zusammengedrückt. Die Vorspannung des Paketes Tellerfedern 38 ist so groß, daß ein Zusammendrücken noch nicht erfolgt.

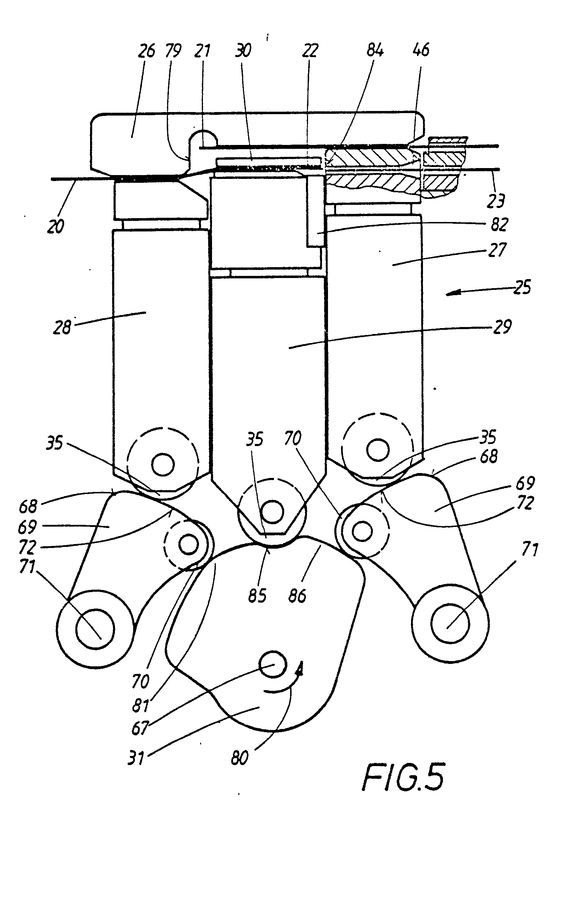

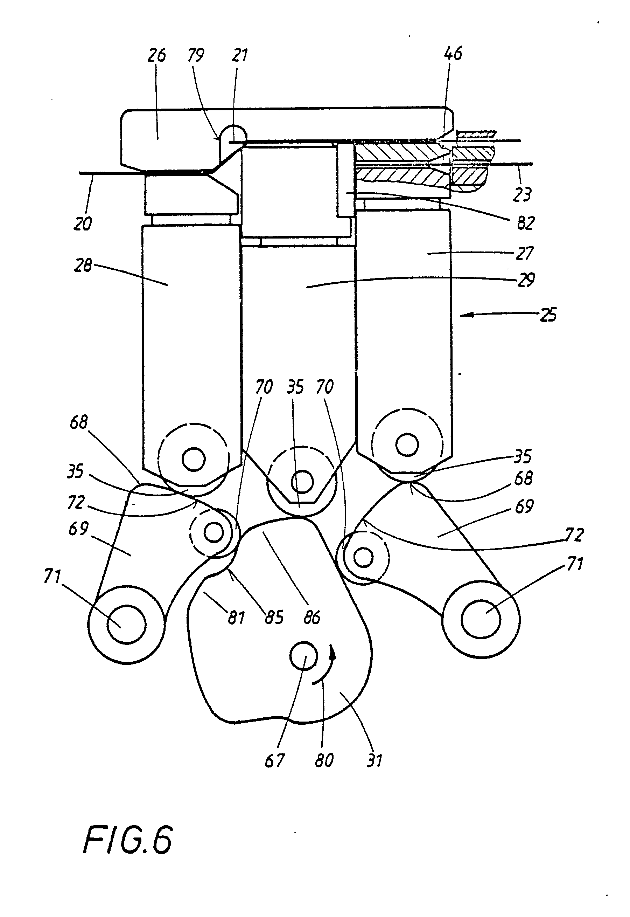

Durch weiteres Drehen der Kurvenscheibe 31 mit der Drehachse 67 kommt die Anlagerolle 35 des mittleren Stempels 29 in eine Vertiefung 85 der Kurvenbahn, so daß der mittlere Stempel 29 sich etwas von der Gegenplatet 26 wegbewegt. . Diese Stellung ist in der Fig. 5 näher dargestellt. In dieser Stellung kann das heiße Messer 30 aus der Stellung zwischen den beiden sich überlappenden Bandenden 21, 22 herausgezogen werden. Nach dem Herausziehen des heißen Messers 30 tritt beim weiteren Drehen der Kurvenscheibe 31 die Anlagerolle 35 des mittleren Stempels 29 mit der Erhebung 86 der Kurvenbahn der Kurvenscheibe 31 in Wirkverbindung, wodurch der mittlere Stempel 29 in Richtung auf die Gegenplatte 26 verschoben wird, wobei die sich überlappenden Bandenden 21 und 22 mit den angeschmolzenen Seitenflächen zusammengepreßt werden. Diese Stellung der Verschlußeinrichtung 25 ist in der Fig. 6 dargestellt. Bei diesem Zusammenpressen der sich überlappenden Bandenden 21, 22 wird zunächst der Anlageteile 57 so weit entgegen der Wirkung der Schraubendruckfeder 58 in den Teil 33 des Stempels 29 eingeschoben, bis der Zapfen 62 des kalottenförmigen Kopfes 60 gegen den Kolben 54 zur Anlage kommt. Anschließend wird dann auch noch der Teil 33 des Stempels 29 entgegen der Wirkung des Paketes Tellerfedern 38 in den Teil 32 des Stempels 29 verschoben, wobei jedoch eine Anlage des Teiles 33 gegen den Teil 32 nicht erfolgt. Durch das Erkalten der sich verbindenden, angeschmolzenen Seitenflächen der sich überlappenden Bandenden 21 und 22 sind die sich überlappenden Bandenden 21, 22 zuverlässig miteinander verschweißt. Durch weiteres Drehen der Kurvenscheibe kann nunmehr die Verschlußeinrichtung 25 in die in der Fig. 1 dargestellte Grundstellung überführt werden.

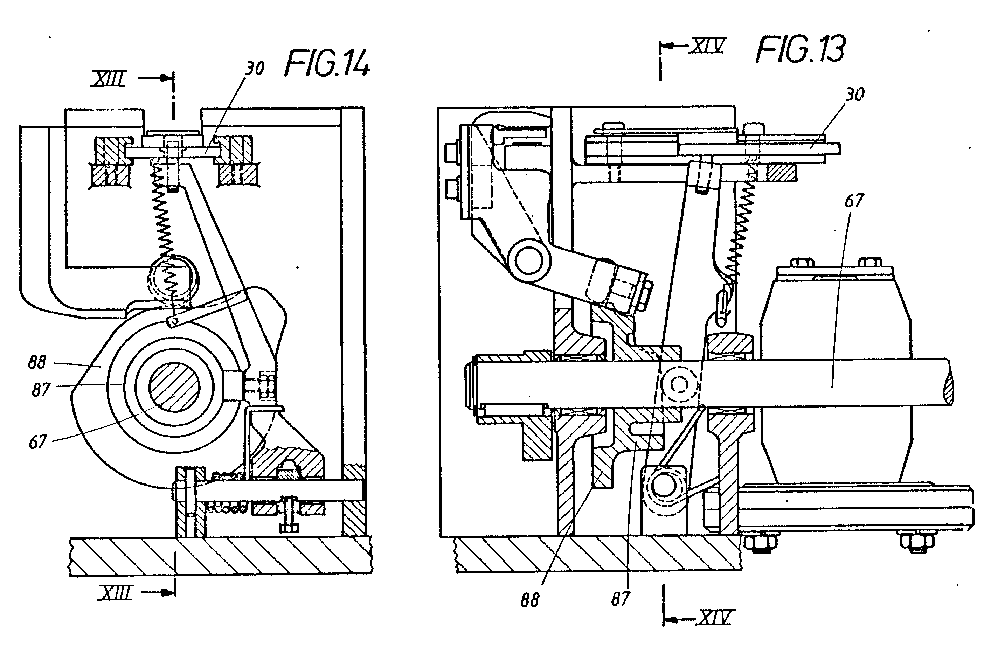

Aus den Fig. 13 und 14 ist ersichtlich, daß auf der quer zur Bandlängsrichtung verlaufenden Drehachse 67 der Kurvenscheibe 31 für die Betätigung der drei Stempel 27, 28, 29 eine Kurventrommel 87 für das quer zur Bandlängsrichtung erfolgende Einschieben und Herausziehen des die Schweißvorrichtung bildenden heißen Messers 30 vorgesehen ist. Auf der quer zur Bandlängsrichtung verlaufenden Drehachse 87 der Kurvenscheibe 31 für die Betätigung der drei Stempel 27, 28, 29 ist eine weitere Kurvenscheibe 88 für das Einschieben und Herausziehen des die überlappenden Bandenden 21, 22 in einem Abstand zueinander haltenden Schiebers 75 vorgesehen. Mit der Drehachse 67 erfolgt somit nicht nur die Betätigung der Stempel 27, 28 und 29, sondern auch das Einschieben und Herausziehen des heißen Messers 20 und des die sich überlappenden Bandenden 21, 22 in einem Abstand zueinander haltenden Schiebers 75. Die einzelnen Bewegungen des Schiebers 75, des heißen Messers 30 und der Stempel 27, 28 und 29 sind somit in einfacher Weise aufeinander abstimmbar.

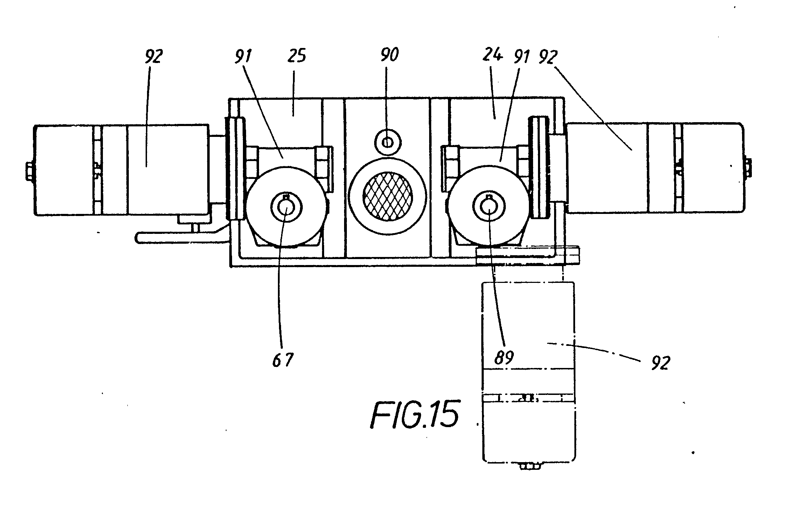

Wie bereits erläutert, verläuft die Drehachse 67 quer zur Bandlängsrichtung. Die Drehachse 67 verläuft dabei, wie insbesondere aus der Fig. 15 ersichtlich, parallel zu den Drehachsen 89, 90 der Antriebsräder der benachbarten Vorschub- und Spannvorrichtung 24, so daß die Verschlußeinrichtung 25 und die Vorschub- und Spannvorrichtung 24 sehr nah nebeneinander angeordnet werden können. Die über Winkelgetriebe 91 an die Drehachse 67, 89 angreifenden Motoren 92 können dabei waagerecht angeordnet werden, um eine geringe Bauhöhe zu erzielen, wie dies in der Fig. 15 dargestellt ist. Darüber hinaus ist es auch möglich, die Motoren 92 senkrecht anzuordnen, um eine geringe Baubreite zu erzielen. Ein solcher senkrecht angeordneter Motor 92 ist in der Fig. 15 strichpunktiert angedeutet.

**Patentansprüche**

1. Vorrichtung zum Spannen eines von einer Vorratsrolle abziehbaren und um ein Packstück gelegten Umreifungsbandes (20) aus Kunststoff und zum Verbinden der sich überlappenden Enden (21, 22) des Umreifungsbandes durch Schweißen und zum Abtrennen des für die gespannte Umreifung überschüssigen Teils des zur Vorratsrolle führenden Umreifungsbandes, bestehend aus einer Vorschub- und Spannvorrichtung (24) für das Umreifungsband, das zunächst in einer das zu umreifende Packstück mit Abstand umschließenden Bandführung vorschiebbar und anschließend bei festgehaltenem vorderen Bandende (21) durch Zurückziehen in Anlage gegen das Packstück bringbar und dann spannbar ist, und einer Verschlußeinrichtung (25) zum Verschweißen der sich überlappenden Bandenden, mit einer zwischen Umreifungsband und Packstück angeordneten Gegenplatte (26), gegen die drei in Bandlängsrichtung hintereinander wirkende Druckteile (27, 28, 29) kurvenscheibengesteuert mit quer zur Bandlängsrichtung verlaufender Drehachse (67) gegen Federwirkung zur Anlage bringbar sind, wobei der erste Druckteil (27) zum Einklemmen des vorderen, freien Bandendes, der zweite Druckteil (28) zum Einklemmen des zweiten Bandendes und der dazwischen angeordnete dritte Druckteil (29) zum Andrücken der sich überlappenden Bandenden gegen die als heißes Messer (30) ausgebildete Schweißvorrichtung und zum Zusammenpressen der angeschmolzenen Bandenden und zum Abtrennen des zur Vorratsrolle führenden Umreifungsbandes dien, dadurch gekennzeichnet, daß die drei in Bandlängsrichtung hintereinander angeordneten Druckteile von geradlinig verschiebbaren Stempeln (27, 28, 29) gebildet sind, die zur Betätigung der drei in Bandlängsrichtung hintereinander angeordneten Stempel (27, 28, 29) vorgesehene Kurvenscheibe (31) eine einzige Kurvenbahn aufweist und der mittlere Stempel (29) unmittelbar mit einer Anlagerolle (35) mit der Kurvenbahn der Kurvenscheibe (31) zusammenwirkt, während die beiden anderen Stempel (27, 28) jeweils mit einer Anlagerolle (35) gegen die Kurvenflächen (68) von schwenkbaren Steuerhebeln (69) anliegen, die ihrerseits über Anlagerollen (70) mit der Kurvenbahn der Kurvenscheibe (31), jeweils in Umfangsrichtung zur Anlagerolle (35) des mittleren Stempels (29) versetzt, in Wirkverbindung stehen.

2. Vorrichtung nach Anspruch 1, dadurch gekennzeichnet, daß der mit seiner Anlagerolle (35) unmittelbar an die Kurvenbahn der Kurvenscheibe (31) angreifende mittlere Stempel (29) derart zur Kurvenscheibe (31) angeordnet ist, daß die Längsmittellinie des Stempels (29) die Drehachse (67) der Kurvenscheibe (31) schneidet.

3. Vorrichtung nach Anspruch 1 oder 2, dadurch gekennzeichnet, daß die beiden schwenkbaren Steuerhebel (69) jeweils für die Anlage der Anlagerolle (35) des zugehörigen Stempels (27, 28) eine die Verschiebung des zugehörigen Stempels bewirkende Kurvenfläche (68) aufweisen, an die sich eine konzentrisch zum Lagerzapfen (71) verlaufende Kurvenfläche (72) anschließt.

4. Vorrichtung nach einem der Ansprüche 1 bis 3, dadurch gekennzeichnet, daß die drei Stempel (27, 28, 29) jeweils zweiteilig ausgebildet und in an sich bekannter Weise der die Anlagerolle (35) aufweisene Teil (32) und der gegen das Umreifungsband (20) zur Anlage kommende Teil (33) entgegen der Wirkung eines vorgespannten Kraftspeichers (34) begrenzt gegeneinander verschiebbar sind.

5. Vorrichtung nach einem der Ansprüche 1 bis 4, dadurch gekennzeichnet, daß bei den beiden zum Einklemmen der Bandenden (21, 22) dienenden Stempel (27, 28) jeweils das den Kraftspeicher (34) bildende Paket Tellerfedern (38) von einer Schraube (39, 40, 45) durchgriffen ist, die den die Anlagerolle (35) aufweisenden Teil (32) und den gegen das Umreifungsband (20) zur Anlage kommenden Teil (33) in einem vorbestimmten Abstand hält und die Vorspannung bestimmt.

6. Vorrichtung nach einem der Ansprüche 1 bis 5, dadurch gekennzeichnet, daß bei den beiden, zum Einklemmen der Bandenden (21, 22) dienenden Stempeln (27, 28) jeweils der die Anlagerolle (35) aufweisende Teil (32) in seiner der Anlagerolle (35) abgekehrten Stirnfläche eine Aussparung (37) aufweist, in der das Paket Tellerfedern (38) angeordnet ist und in der der gegen das Umreifungsband (20) zur Anlage kommende Teil (33) mit einem abgesetzten Ansatz (36) teleskopartig verschiebbar eingreift.

7. Vorrichtung nach einem der Ansprüche 1 bis 6, dadurch gekennzeichnet, daß der zum Einklemmen des vorderen, freien Bandendes (21) dienende Stempel (27) einen Schlitz (46) zum Durchführen des Umreifungsbandes (20) aufweist, wobei der Schlitz (46) von einer einen U-förmigen Querschnitt aufweisenden, aufgesetzten Kappe (47) gebildet ist, die mit einem die Schenkel (48) durchquerenden Spannstift (49) an dem Teil (33) des Stempels (27) gehaltert ist, der dem Umreifungsband (20) zugekehrt ist und mit seiner freien Stirnfläche die Anlage- und haltefläche (50) für das vordere Ende (21) des Umreifungsbandes (20) bildet.

8. Vorrichtung nach einem der Ansprüche 1 bis 7, dadurch gekennzeichnet, daß beim mittleren Stempel (29), der zum Andrücken der sich überlappenden Bandenden (21, 22) gegen das die Heizvorrichtung bildende heiße Messer (30) und zum Zusammenpressen der angeschmolzenen Bandenden dient, der zum Umreifungsband (20) zugekehrte Teil (33) einen Ansatz (52) mit T-förmigem Querschnitt aufweist, der in eine T-förmige Nut (53) des die Anlagerolle (35) aufweisenden Teiles (32) eingreift und dabei entgegen der Wirkung des Kraftspeichers (34) ein begrenztes Zusammendrücken der beiden Teile (32, 33) in Längsrichtung des Stempels (29) zuläßt.

9. Vorrichtung nach einem der Ansprüche 1 bis 8, dadurch gekennzeichnet, daß beim mittleren Stempel (29) das den Kraftspeicher (34) bildende Paket Tellerfedern (38) von einem an einem Kolben (54) angeformten Zapfen (55) durchgriffen ist, wobei der Kolben (54) mit dem Paket Tellerfedern (38) in einer in dem die Anlagerolle (35) aufweisenden Teil (32) vorgesehenen Aussparung (37) angeordnet und der unter der Wirkung der Tellerfedern (38) stehende Kolben (54) gegen die freie Stirnfläche des T-förmigen Ansatzes (52) des dem Umreifungsband zugekehrten Teiles (33) des Stempels (29) anliegt.

10. Vorrichtung nach einem der Ansprüche 1 bis 9, dadurch gekennzeichnet, daß der an dem Kolben (54) angeformte Zapfen (55), der das Paket Tellerfedern (38) durchgreift, mit seinem freien Ende in einem Durchbruch (42) verschiebbar eingreift, der im Boden (41) der das Paket Tellerfedern (38) aufnehmenden Aussparung (37) vorgesehen ist.

11. Vorrichtung nach einem der Ansprüche 1 bis 10, dadurch gekennzeichnet, daß beim mittleren Stempel (29), der dem Umreifungsband zugekehrte Teil (33) in seiner dem Umreifungsband (20) zugekehrten Stirnfläche eine T-förmige Nut (56) aufweist, in der ein Anlageteil (57) mit etwa T-förmigem Querschnitt eingreift und entgegen der Wirkung einer Feder (58) begrenzt eindrückbar ist.

12. Vorrichtung nach einem der Ansprüche 1 bis 11, dadurch gekennzeichnet, daß der Anlageteil (47) des mittleren Stempels (29) in der Unterseite eine kalottenförmige Aufnahme (59) für den kalottenförmigen Kopf (60) eines federbelasteten Stößels (61) aufweist.

13. Vorrichtung nach einem der Ansprüche 1 bis 12, dadurch gekennzeichnet, daß der federbelastete Stößel (61) an der Rückseite des kalottenförmigen Kopfes (60) einen Zapfen (62) aufweist, auf dem eine Schraubendruckfeder (58) aufgesteckt ist, die sich einerends gegen die Rückseite des kalottenförmigen Kopfes (60) und anderends gegen den Boden (63) einer zur Führung des Kopfes (60) dienenden Ausnehmung (64) abstützt.

14. Vorrichtung nach einem der Ansprüche 1 bis 13, dadurch gekennzeichnet, daß der an der Rückseite des kalottenförmigen Kopfes (60) vorgesehene Zapfen (62) mit seinem freien Ende in einen Durchbruch (65) verschiebbar eingreift, der im Boden (63) der die Schraubendruckfeder (58) aufnehmenden Ausnehmung (64) vorgesehen ist, wobei der Zapfen (62) in der eingedrückten Stellung gegen den federbelasteten Kolben (64) der beiden Teile (32, 33) des Stempels (29) zur Anlage kommt.

15. Vorrichtung nach einem der Ansprüche 1 bis 14, dadurch gekennzeichnet, daß auf der quer zur Bandlängsrichtung verlaufenden Drehachse (67) der Kurvenscheibe (31) für die Betätigung der drei Stempel (27, 28, 29) eine weitere Kurvenscheibe (88) für das Einschieben und Herausziehen eines die sich überlappenden Bandenden (21, 22) in einem Abstand zueinander haltenden Schiebers (75) vorgesehen ist.

**Revendications**

1. Dispositif pour tendre une bande d'enveloppement (20) en matière plastique, à extraire d'un rouleau d'approvisionnement et enveloppant un objet à emballer, pour assembler par soudage les extrémités (21, 22) qui se chevauchent de la bande d'enveloppement, et pour séparer la partie excédentaire pour l'enveloppe tendue, de la bande d'enveloppement aboutissant au rouleau d'approvisionnement, consistant en un dispositif d'avancement et de serrage (24) pour la bande d'enveloppement qui est agencée de façon à être d'abord déplaçable en translation dans un guide de bande entourant à distance l'objet à emballer et ensuite amenée au contact de l'objet à emballer pous serrée, par tirage en arrière, lorsque l'extrémité avant (21) de la bande est immobilisée, et en un dispositif de fermeture (25), servant à souder les extrémités qui se chevauchent de la bande et comportant un contre-plateau (26), disposé entre la bande d'enveloppement et l'objet à emballer, contre lequel trois organes de pression (27, 28, 29) qui agissent en série dans la direction longitudinale de la bande peuvent être mis en contact, contre une action élastique, sous la commande de cames, à axe de rotation (67) disposé transversalement par rapport à la direction longitudinale de la bande, dispositif dans lequel le premier organe de pression (27) sert a coincer l'extrémité avant libre de la bande, le deuxième organe de pression (28) à coincer la deuxième extrémité de la bande et le troisième organe de pression (29), situé entre les deux premiers, à presser les extrémités qui se chevauchent de la bande contre le dispositif de soudure formé d'un couteau chaud (30), à comprimer les extrémités ramollies par fusion de la bande et à sectionner la bande d'enveloppement aboutissant au rouleau d'approvisionnement, caractérisé en ce que les trois organes de pression disposés en série selon la direction longitudinale de la bande sont constitués par des poinçons (27, 28, 29) déplaçables en ligne droite, en ce que la came (31) prévue pour actionner les trois poinçons (27, 28, 29), disposés en série selon la direction longitudinale de la bande, possède une surface active unique, et en ce que le poinçon central (29) coopère directement, par un galet d'appui (35), avec la surface active de la came (31), pendant que les deux autres poinçons (27, 28) reposent chacun, par un galet d'appui (35), contre les surfaces de came (68) de leviers de commande pivotants (69) qui, de leur côté, coopèrent chacun, par l'intermédiaire de galets d'appui (70), avec la surface active de la came (31), en étant décalés chacun, en direction circonférentielle, par rapport au galet d'appui (35) du poinçon central (29).

2. Dispositif selon la revendication 1, caractérisé en ce que le poinçon central (29), attaquant directement par son galet d'appui (35) la surface active de la came (31), est disposé, par rapport à la came, de telle façon que l'axe longitudinal du poinçon (29) coupe l'axe de rotation (67) de la came (31).

3. Dispositif selon l'une des revendications 1 et 2, caractérisé en ce que chacun des deux leviers de commande pivotants (69) comporte, pour la mise en appui du galet (35) du poinçon (27, 28) correspondant, une surface de came (68), qui provoque le déplacement du poinçon correspondant, et à laquelle se raccorde une surface de came (72) disposée concentriquement par rapport au tourillon (71).

4. Dispositif selon l'une des revendications 1 à 3, caractérisé en ce que les trois poinçons (27, 28, 29) sont constitués chacun en deux pièces et en ce que, d'une manière connue en soi, la pièce (32) portant le galet d'appui (35) et la pièce (33) venant en contact avec la bande d'enveloppement (20), sont agencées de façon à pouvoir se déplacer l'une par rapport à l'autre de façon limitée contre l'action d'un accumulateur d'énergie (34) sous tension initiale.

5. Dispositif selon l'une des revendications 1 à 4, caractérisé en ce que, dans chacun des deux poinçons (27, 28) servant à coincer les extrémités (21, 22) de la bande, l'empilage de rondelles à ressort (38) formant l'accumulateur d'énergie (34) est traversé par une vis (39, 40, 45) qui maintient à une distance prédéterminée la pièce (32) comportant le galet d'appui (35) et la pièce (33) venant en contact avec la bande d'enveloppement (20), et qui détermine la tension initiale.

6. Dispositif selon l'une des revendications 1 à 5, caractérisé en ce que, dans chacun des deux poinçons (27, 28) servant à coincer les extrémités (21, 22) de la bande, la pièce (32) comportant le galet d'appui (35) comprend, sur sa face avant éloignée du galet d'appui (35), un évidement dans lequel l'empilage de rondelles à ressort est installé et dans lequel la pièce (33) venant en contact avec la bande d'enveloppement (20) pénètre, de façon mobile télescopiquement, par un talon en retrait (36).

7. Dispositif selon l'une des revendications 1 à 6, caractérisé en ce que le poinçon (27), servant à coincer l'extrémité avant libre (21) de la bande, comporte une fente (46) pour le passage de la bande d'enveloppement (20), et en ce que la fente (46) est constituée par une chape rapportée (47), de section en U, qui est maintenue, par un tirant (49) traversant les branches (48), contre la pièce (33) du poinçon (27) tournée vers la bande d'enveloppement, et qui forme, par sa face frontale libre, la surface d'appui et de retenue (50) pour l'extrémité avant (21) de la bande d'enveloppement (20).

8. Dispositif selon l'une des revendications 1 à 7, caractérisé en ce que, dans le poinçon central (29) qui sert à presser les extrémités (21, 22) qui se chevauchent de la bande contre le couteau chaud (30), constituant le dispositif de chauffage, et à comprimer lex extrémités ramollies de la bande, la pièce (33) tournée vers la bande d'enveloppement (20) comporte un talon (52) de section en T qui s'emboîte dans une encoche (53) en T de la pièce (32) comportant le galet d'appui (35), et permet ainsi une compression limitée des deux pièces (32, 33) dans la direction longitudinale du poinçon (29), contre l'action de l'accumulateur d'énergie (34).

9. Dispositif selon l'une des revendications 1 à 8, caractérisé en ce que, dans le poinçon central (29), l'empilage de rondelles à ressort (38) qui forme l'accumulateur d'énergie (34) est traversé par une tige (55) formée sur un piston (54), en ce que le piston (54) est disposé, avec l'empilage de rondelles à ressort (38), dans un évidement (37) prévu dans la pièce (32) comportant le galet d'appui (35), et en ce que le piston (54), soumis à l'action des rondelles à ressort, repose contre la face avant libre du talon en T (52) de la pièce (33) du poinçon (29), qui est tournée vers la bande d'enveloppement.

10. Dispositif selon l'une des revendications 1 à 9, caractérisé en ce que la tige (55), qui est formée sur le piston (54) et qui traverse l'empilage de rondelles à ressort (38), coulisse, par son extrémité libre, dans une ouverture (42) qui est prévue dans le fond (41) de l'évidement (37) recevant l'empilage de rondelles à ressort (38).

11. Dispositif selon l'une des revendications 1 à 10, caractérisé en ce que, dans le poinçon central (29), la pièce (33) tournée vers la bande d'enveloppement comporte, dans sa face avant tournée vers la bande d'enveloppement (20), une encoche (56) en T, dans laquelle pénètre une partie d'appui (57) de section à peu près en T et est enfonçable de façon limitée contre l'effort d'un ressort (58).

12. Dispositif selon l'une des revendications 1 à 11, caractérisé en ce que la partie d'appui (57) du poinçon central (29) comporte, sur sa face inférieure, un réceptacle (59), en forme de calotte, pour la tête (60), en forme de calotte, d'un poussoir (61) chargé par un ressort.

13. Dispositif selon l'une des revendications 1 à 12, caractérisé en ce que le poussoir (61) chargé

par un ressort comporte, sur la face arrière de la tête (60) en forme de calotte, une tige (62) sur laquelle est enfilé un ressort hélicoîdal de compression (58) qui s'appuie, par une extrémité, contre la face arrière de la tête (60) en forme de calotte et, par l'autre extrémité, contre le fond (63) d'un évidement (64) servant de guide à la tête (60).

14. Dispositif selon l'une des revendications 1 à 13, caractérisé en ce que la tige (62), qui est prévue sur la face arrière de la tête (60) en forme de calotte, coulisse, par son extrémité libre, dans une ouverture (65) qui est prévue dans le fond (63) de l'évidement (64) recevant le ressort hélicoîdal de compression (58), ce grâce à quoi la tige (62) vient, dans sa position enfoncée, en contact avec le piston (54), chargé par un ressort, des deux pièces (32, 33) du poinçon (29).

15. Dispositif selon l'une des revendications 1 à 14, caractérisé en ce que sur l'axe de rotation (67) de la came (31), disposé transversalement par rapport à la direction longitudinale de la bande, il est prévu une autre came (88) pour actionner les trois poinçons (27, 28, 29), pour faire entrer et sortie un tiroir (75) qui maintient à distance l'une de l'autre les extrémités (21, 22) qui se chevauchent de la bande.

## Claims

1. Apparatus for tensioning a hooping strip (20) of plastics material, which can be drawn off a supply roll and laid around a pack item, and for connecting the mutually overlapping ends (21, 22) of the hooping strip by welding and for cutting off the portion, which is excess for the tensioned hooping, of the hooping strip which leads to the supply roll, comprising a feed and tensioning means (24) for the hooping strip which can firstly be advanced in strip guide which is disposed around the pack item to be hooped, at a spacing therefrom, and then, by a retraction movement, with the leading end (21) of the strip fixed, can be brought to bear against the pack item and can then be tensioned, and a closure means (25) for welding the mutually overlapping ends of the strip, having a co-operating plate (26) which is arranged between the hooping strip and the pack item wherein three pressure portions (27, 28, 29) which act in succession in the longitudinal direction of the strip can be brought to bear against the co-operating plate (26), under the control of cam disc means, with an axis of rotation (67) which extends transversely with respect to the longitudinal direction of the strip, against a spring action, the first pressure portion (27) serving to clamp the leading free end of the strip, the second pressure portion (28) serving to clamp the second end of the strip and the third pressure portion (29) which is arranged therebetween serving to press the mutually overlapping ends of the strip against the welding means which is in the form of a hot blade (30) and for pressing together the ends of the strip which have begun to melt, and for cutting off the hooping strip which leads to the supply roll, characterised in that the three pressure portions which are arranged in succession in the longitudinal direction of the strip are formed by ram members (27, 28, 29) which are displaceable in a straight line, the cam disc means (31) which is provided for actuating the three ram members (27, 28, 29) which are arranged in succession in the longitudinal direction of the strip has a single cam track and the middle ram member (29) co-operates directly by a contact roller (35) with the cam track of the cam disc means (31) while the other two ram members (27, 28) each bear by means of a contact roller (35) against the cam surfaces (68) of pivotable control levers (69) which in turn are operatively connected by way of contact rollers (70) to the cam track of the cam disc means (31), each being displaced in the circumferential direction relative to the contact roller (35) of the middle ram member (29).

2. Apparatus according to claim 1 characterised in that the middle ram member (29) which engages directly against the cam track of the cam disc means (31), with its contact roller (35), is arranged relative to the cam disc means (31) in such a way that the longitudinal centre line of the ram member (29) intersects the axis of rotation (67) of the cam disc means (31).

3. Apparatus according to claim 1 or claim 2 characterised in that the two pivotable control levers (69) each have, for contact of the contact roller (35) of the associated ram member (27, 28), a cam surface (68) which produces the movement of the associated ram member and which is adjoined by a cam surface (72) extending concentrically with respect to the mounting trunnion (71).

4. Apparatus according to one of claims 1 to 3 characterised in that the three ram members (27, 28, 29) are each of a two-part construction and in per se known manner the part (32) which has the contact roller (35) and the part (33) which comes to bear against the hooping strip (20) are limitedly displaceable relative to each other against the force of a presetressed force storage member (34).

5. Apparatus according to one of claims 1 to 4 characterised in that, in the case of the two ram members (27, 28) which serve for clamping the ends (21, 22) of the strip, the respective pack of plate springs (38), forming the force storage member (34), has engaging therethrough a screw (39, 40, 45) which holds the part (32) having the contact roller (35) and the part (33) which comes to bear against the hooping strip (20), at a predetermined spacing, and determines the prestressing.

6. Apparatus according to one of claims 1 to 5 characterized in that, in the case of the two ram members (27, 28) which serve for clamping the ends (21, 22) of the strip, the respective part (32) which has the contact roller (35) has, in its end face which is remote from the contact roller (35), a recess (37) in which the pack of plate springs (38) is arranged and in which the part (33) which comes to bear against the hooping strip (20) telescopically displaceably engages with a reduced lug portion (36).

7. Apparatus according to one of claims 1 to 6 characterised in that the ram member (27) which serves for clamping the leading free end (21) of the strip has a slot (46) for the hooping strip (20) to be passed therethrough, wherein the slot (46) is formed by a fitted cap (47) which is of U-shaped cross-section and which is mounted with a clamping pin (49) that passes through the limb portion (48), on the part (33) of the ram member (27) which is towards the hooping strip (20), and with its free end face forms the contact and holding face (50) for the leading end of the hooping strip (20).

8. Apparatus according to one of claims 1 to 7 characterised in that, in the case of the middle ram member (29) which serves to press the mutually overlapping ends (21, 22) of the strip against the hot blade (30) forming the heating means and for pressing together the ends of the strip which have begun to melt, the part (33) which is towards the hooping strip (20) has a lug portion (52) of T-shaped cross-section which engages into a T-shaped groove (53) in the part (32) which has the contact roller (35), and thereby permits the two parts (32, 33) to be limitedly compressed in the longitudinal direction of the ram member (29), against the force of the force storage member (34).

9. Apparatus according to one of claims 1 to 8 characterised in that, in the case of the middle ram member (29), the pack of plate springs (38) forming the force storage member (34) has a pin (55) passing therethrough, the pin being formed on a piston (54), wherein the piston (54), with the pack of plate springs (38), is arranged in a recess (37) provided in the part (32) having the contact roller (35), and the piston (54) which is subjected to the force of the plate springs (38) bears against the free end face of the T-shaped lug portion (52) of the part (33) of the ram member (29), which is towards the hooping strip.

10. Apparatus according to one of claims 1 to 9 characterised in that the pin (55) which is formed on the piston (54) and which engages through the pack of plate springs (38) engages displaceably with its free end in an opening (42) which is provided in the bottom (41) of the recess (37) which accommodates the pack of plate springs (38).

11. Apparatus according to one of claims 1 to 10 characterised in that, in the case of the middle ram member (29), the part (33) which is towards the hooping strip is provided in its end face which is towards the hooping strip (20) with a T-shaped groove (56) in which a contact portion (57) of substantially T-shaped cross-section engages and can be limitedly pressed in, against the force of a spring (58).

12. Apparatus according to one of claims 1 to 11 characterised in that the contact portion (57) of the middle ram member (29) is provided in the underside with a part-spherical receiving means (59) of the part-spherical head (60) of a spring-loaded thrust member (61).

13. Apparatus according to one of claims 1 to 12 characterised in that at the rear of the part-spherical head (60) the spring-loaded thrust member (61) has a pin (62) on which is fitted a compression coil spring (58) which is supported at one end against the rear of the part-spherical head (60) and at the other end against the bottom (63) of a recess (64) serving to guide the head (60).

14. Apparatus according to one of claims 1 to 13 characterised in that the pin (62) provided at the rear of the part-spherical head (60) displaceably engages with its free end into a through opening (65) in the bottom (63) of the recess (64) which accommodates the compression coil spring (58), wherein, in the pressed-in position, the pin (62) comes to bear against the spring-loaded piston (54) of the two parts (32, 33) of the ram member (29).

15. Apparatus according to one of claims 1 to 14 characterised in that provided on the axis of rotation (67), extending transversely with respect to the longitudinal direction of the strip, of the cam disc means (31) for actuation of the three ram members (27, 28, 29) is a further cam disc means (88) for pushing in and pulling out a slider (75) which holds the mutually overlapping ends (21, 22) of the strip at a spacing from each other.

FIG.1

FIG.2

FIG.3

FIG. 4

# 0 095 644

FIG.5

FIG.6

FIG.8          FIG.7

0 095 644

FIG.10

FIG.9

FIG. 12

FIG. 11

FIG.14

FIG.13

0 095 644

FIG.15